# EUROPÄISCHE PATENTSCHRIFT

(11) **EP 1 128 631 B1**
(45) Veröffentlichungstag und Bekanntmachung des Hinweises auf die Patenterteilung: **30.11.2005**
(21) Anmeldenummer: 01102361.1
(22) Anmeldetag: 02.02.2001
(51) Int. Cl.: H04L 29/06

(54) **Kommunikationseinrichtung und Kommunikationsverfahren**
Communication device and communication method
Dispositif et procédé pour les communications

(30) Priorität: 23.02.2000 DE 10008199
(43) Veröffentlichungstag der Anmeldung: 29.08.2001
(73) Patentinhaber: Voith Turbo GmbH & Co. KG, 89522 Heidenheim (DE)
(72) Erfinder: Brunnengräber, Stefan, 89522 Heidenheim (DE)
(74) Vertreter: Dr. Weitzel & Partner

(56) Entgegenhaltungen:
- WO-A-97/48050
- US-A- 5 974 453
- HUI S-C ET AL: "A dynamic IP addressing system for Internet telephony applications" COMPUTER COMMUNICATIONS, ELSEVIER SCIENCE PUBLISHERS BV, AMSTERDAM, NL, Bd. 21, Nr. 3, 25. März 1998 (1998-03-25), Seiten 254-266, XP004115293 ISSN: 0140-3664

## Beschreibung

Die Erfindung betrifft eine Kommunikationseinrichtung und ein Kommunikationsverfahren zur Zuordnung und Verwaltung von Namen und Adressen.

Bei einer herkömmlichen, interaktiven Kommunikation zweier elektronischer Geräte über das Internet ist es erforderlich, daß beide Geräte online am Internet angeschlossen sind und daß beiden elektronischen Geräte die Internet-Adresse (IP-Adresse) des jeweils anderen Kommunikationspartners bekannt ist. Die Adresse wird dem elektronischen Gerät durch den Provider zugeordnet, über den die Einwahl in das Internet des elektronischen Gerätes erfolgt ist. Als Einwahl-Provider können verschiedene Provider gewählt werden, z.B. T-Online, AOL, CompuServe etc. Die Einwahl des elektronischen Geräts in das Internet erfolgt z. B. über ein Modem, das Ethernet, eine ISDN-Karte, Mobilfunk usw.

Für eine erste Kontaktaufnahme zwischen den elektronischen Geräten muß jedoch einem der elektronischen Geräte eine Adresse oder ein Domain-Name des anderen Kommunikationspartners bekannt sein. Die Adresse oder der Domain-Name muß dabei von dem einen Kommunikationspartner manuell, d.h. per e-mail, Telefon, Fax oder dergleichen erfragt und in das elektronische Gerät eingegeben werden. Dabei besteht das Problem, daß bei einem Wechsel des Einwahl-Providers eine neue IP-Adresse zugewiesen wird und sich ebenso der gegebenenfalls zugewiesene Domain-Name ändert bzw. der Name-Server-Eintrag unter Berücksichtigung der neuen IP-Adresse aktualisiert werden muss. Weiterhin kann bei jeder Einwahl des elektronischen Gerätes in das Internet vom Provider eine freie IP-Adresse dynamisch zugewiesen werden, so daß bei jeder Einwahl die IP-Adresse manuell neu mitgeteilt und aktualisiert werden muß. Das gleiche gilt für den Fall, daß nach einem Ortswechsel eines elektronischen Gerätes ein neuer Verbindungsknoten zur Einwahl ins Internet benutzt wird.

Das Dokument "A dynamic IP addressing system for Internet telephony applications". Hui et Al. veröffentlicht am 25 März 1998, behandet Telefonieren über das Internet und es offenbart einen server, der für das Aktualisieren dynamischer IP-Adressen sorgt und "Voice Mail" zur Verfügung stellt, wenn eine Teilnehmereinrichtung nicht erreichbar ist.

Aufgabe der Erfindung ist es, eine Kommunikationseinrichtung bzw. ein Kommunikationsverfahren zu schaffen, so daß eine Kommunikation zwischen zwei elektronischen Geräten aufgebaut werden kann, ohne daß zuvor die Adresse oder der Domain-Name des einen elektronischen Gerätes manuell übermittelt und eingegeben werden muß bzw. das Verfahren so zu gestalten, dass das Gerät stets über denselben Domain-Namen erreichbar ist, gleichgültig, welcher Internet-Zugang gewählt wird.

Die Kommunikations einrichtung soll die Funktionen des Geräts ausführen, wenn letzteres nicht on-line ist und somit über das Kommunikationsnetzwerke nicht erreichbar ist.

Diese Aufgabe wird mit den Merkmalen des Anspruchs 1 bzw. 8 gelöst.

Gemäß Anspruch 1 wird eine Kommunikationseinrichtung vorgesehen, die Namen und Adressen einer Teilnehmereinrichtung zuordnet und verwaltet, wobei die Kommunikationseinrichtung ein Mittel zur Vergabe eines neuen Namens für eine neue Teilnehmereinrichtung bei der ersten Verbindung zwischen der Kommunikationseinrichtung und der Teilnehmereinrichtung, ein Mittel zur Aktualisierung der Adresse bei jeder neuen Verbindung über das Kommunikationsnetzwerk und ein Mittel zur Verbindung einer Nutzereinrichtung mit der Teilnehmereinrichtung aufweist. Dabei übermittelt die Teilnehmereinrichtung bei jedem Verbindungsaufbau über das Kommunikationsnetzwerk zunächst der Kommunikationseinrichtung seine aktuelle Adresse. Die Nutzereinrichtung, die mit der Teilnehmereinrichtung eine Verbindung aufbauen will, nimmt zunächst Kontakt mit der Kommunikationseinrichtung auf und wird von dieser mit der Teilnehmereinrichtung verbunden oder erhält von der Kommunikationseinrichtung die aktuelle Adresse der Teilnehmereinrichtung für einen Verbindungsaufbau. Die Kommunikationseinrichtung fungiert somit als "Name-Server", der die Verknüpfung zwischen aktueller IP-Adresse des Teilnehmers mit dessen (Domain-)Namen verknüpft.

Jedoch kann zusätzlich eine Teilnehmereinrichtung anhand eines vorgegebenen Domain-Namens angesprochen werden, der sich z. B. aus deren Seriennummer ergibt. Der Domain-Name ersetzt somit eine Kennung.

Die Kommunikationseinrichtung kann dabei ein Server sein, der ständig online mit dem Kommunikationsnetzwerk verbunden ist. Die Teilnehmereinrichtung und die Nutzereinrichtung können dabei ein Computer, ein mobiler Organizer, ein Taschen-PC, ein Notebook-Computer, ein Handy, eine Maschinensteuerung, ein Abrechnungssystem, wie z.B. ein elektronisches Kassensystem, eine Sicherheitseinrichtung (Türen, Tore, Tresore), eine Video-Überwachungskamera mit einer Datenkommunikationseinheit oder ein Haushaltsgerät mit einer Kommunikationseinheit sein, bzw. eine elektronische Steuerung jeglicher Funktionalität, die über ein Kommunikations-Netzwerk erreichbar ist.

Der Verbindungsaufbau zwischen der Teilnehmereinrichtung und der Nutzereinrichtung dient dabei dem Austausch von Daten, der Wartung oder Fernabfrage der externen Fernbedienung von Computern - selbstverständlich nur beispielshalber -, oder dem Update von Software der angeschlossenen Einrichtungen.

Das Kommunikationsnetzwerk ist z.B. das Internet oder ein firmeneigenes Intranet bzw. ein Kommunikations-Netzwerk mit dynamischer Adressenvergabe, bei dem eine Zuordnung der Adressen zu eindeutigen Namen der Teilnehmer wünschenswert ist. Damit läßt sich ein Anlagenverbund bei einem Hersteller aufbauen, ohne ein separates Netzwerk installieren zu müssen.

Sobald die Teilnehmereinrichtung online an das Kommunikationsnetzwerk angeschlossen ist, erfährt die Kommunikationseinrichtung dessen neue Adresse und jede Nutzereinrichtung, die mit der Teilnehmereinrichtung eine Verbindung aufbauen will, erfragt zunächst von der Kommunikationseinrichtung die aktuelle Adresse bzw. die Kommunikationseinrichtung erfährt dort die Adresse automatisch unter Angabe des Namens einer Teilnehmereinrichtung. Die Kommunikationseinrichtung fungiert in diesem Falle als Name-Server. Daher muß die aktuelle Adresse der Teilnehmereinrichtung nicht bei jedem neuen Verbindungsaufbau nach einer Änderung deren Adresse jeder potentiellen Nutzereinrichtung mitgeteilt werden. Für die Kommunikation mit der Teilnehmereinrichtung ist es daher unerheblich, über welchen Provider ein Zugang z.B. zum Internet erfolgt oder ob der Provider gewechselt wird, da jeweils die Adresse in der Kommunikationseinrichtung aktualisiert wird. Der Nutzer der Teilnehmereinrichtung muß daher keinen Verwaltungsaufwand betreiben, seine Adresse Nutzereinrichtungen mitzuteilen.

Bei einer vorteilhaften Ausgestaltung der Kommunikationseinrichtung fragt die Kommunikationseinrichtung automatisch, z.B. durch eine zyklische Abfrage, den Verbindungszustand der Teilnehmereinrichtung zum Kommunikationsnetzwerk ab und registriert, ob die Teilnehmereinrichtung online mit dem Kommunikationsnetzwerk verbunden ist oder nicht. Versucht dabei eine Nutzereinrichtung über die Kommunikationseinrichtung eine Verbindung zur Teilnehmereinrichtung aufzubauen, so kann die Kommunikationseinrichtung der Nutzereinrichtung unmittelbar mitteilen, daß die Teilnehmereinrichtung momentan nicht erreichbar ist, so daß diese keine Verbindung zur Teilnehmereinrichtung direkt aufbauen kann.

Gemäß Anspruch 1 führt die Kommunikationseinrichtung die Kommunikation mit der Nutzereinrichtung anstelle der Teilnehmereinrichtung durch, falls die Teilnehmereinrichtung nicht online über das Kommunikationsnetzwerk erreichbar ist. Dabei werden anschließend die durch die ersatzweise Kommunikation übermittelten Daten bei der nächsten Verbindung zwischen der Kommunikationseinrichtung und der Teilnehmereinrichtung an diese übermittelt und dort aktualisiert.

Daher ist es nicht notwendig, daß für jeden Datenaustausch zwischen der Nutzereinrichtung und der Teilnehmereinrichtung die Teilnehmereinrichtung tatsächlich online mit dem Kommunikationsnetzwerk verbunden ist. Die Kommunikation findet ersatzweise zwischen der Nutzereinrichtung und der Kommunikationseinrichtung statt. Somit ist es nicht notwendig, daß die Nutzereinrichtung wiederholt versucht eine Verbindung zur Teilnehmereinrichtung herzustellen, sondern es genügt lediglich ein einmaliger Kontakt zur ständig mit dem Kommunikationsnetzwerk in Verbindung stehenden Kommunikationseinrichtung.

Eine solche Ersatzkommunikation zwischen der Nutzereinrichtung und der Kommunikationseinrichtung findet z.B. dadurch statt, daß ein Teil des Datenbestandes und der Software-der Teilnehmereinrichtung ständig als gespiegelter Daten- und Softwarebestand der Teilnehmereinrichtung auf einem Speicher der Kommunikationseinrichtung zur Verfügung steht. Dabei kann der gesamte Datenbestand und Softwarebestand der Teilnehmereinrichtung auf der Kommunikationseinrichtung gespiegelt werden oder nur der Teil, der einer Kommunikation mit Nutzereinrichtungen zugänglich ist. Nach dem dann die Teilnehmereinrichtung eine Verbindung zur Kommunikationseinrichtung aufbaut, wird durch Vergleich der Daten- und Softwarebestände festgestellt, ob ein Abgleichbedarf besteht und entsprechend der Datenbestand zwischen der Kommunikationseinrichtung und der Teilnehmereinrichtung auf den neuesten Stand abgeglichen.

Damit der Verwaltungsaufwand auf Seiten der Nutzereinrichtung verringert wird, ist die Kommunikationseinrichtung ständig unter der gleichen Adresse bzw. unter dem gleichen Domain-Namen erreichbar bzw. ist als "Name-Server" der Teilnehmereinrichtung ständig im Kommunikations-Netzwerk verfügbar.

Die Kommunikationseinrichtung kann dabei vorteilhafterweise eine Vielzahl von Teilnehmereinrichtungen neu registrieren und ihnen jeweils einen eigenen Namen bzw. Domain-Namen zuweisen, sowie deren Adressen laufend aktualisiert halten.

Anhand einer Zeichnung wird ein Ausführungsbeispiel der Erfindung näher erläutert.

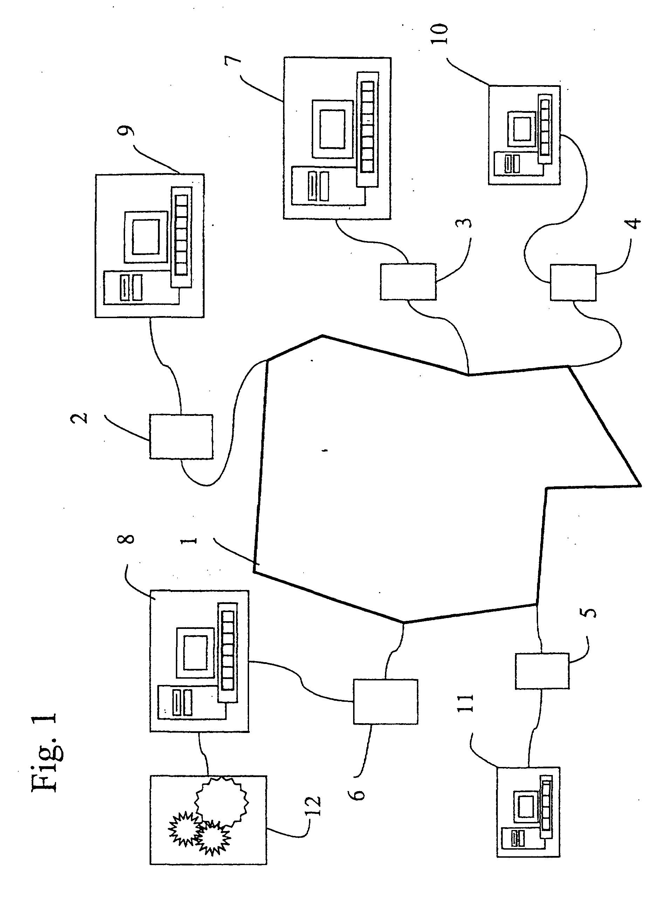

Fig. 1 zeigt eine Kommunikationsstruktur mit einer Kommunikationseinrichtung.

Fig. 1 stellt eine Kommunikationsstruktur dar, bei der die Kommunikation über ein Internet-Netzwerk 1 erfolgt. An-das Internet 1 sind mehrere Provider 2 bis 6 angeschlossen, die wiederum mit Endnutzern 7 bis 11 verbunden sind. Die Provider 2 bis 6 stellen die Verbindung zwischen einem lokalen Kommunikationsnetzwerk, wie dem Telefonnetz, und dem Internet 1 her und weisen den Endnutzem 7 bis 11 bei jedem Verbindungsaufbau eine dynamische Internet-Adresse zu. Die Endnutzer 7-11 können alle gängigen Dienste, die durch das Internet 1 zur Verfügung gestellt werden nutzen, wie z.B. HTTP, FTP, e-mail etc.

Der Endnutzer 7 ist ein Firmenserver eines Herstellers von Anlagen. Der Firmenserver 7 verwaltet die Internet-Adressen der an die Kunden ausgelieferten Anlagen und gegebenenfalls die firmeneigenen Anlagen, mit denen eine Kommunikation über das Internet 1 möglich ist. Endnutzer 7 ist ein Server, der frei im Internet verfügbar sein muß. Der Endnutzer 8 ist eine Anlagensteuerung, die eine Anlage 12 des o.g. Herstellers beim Kunden steuert. Die Anlagensteuerung 8 kann automatisch eine Verbindung zum Internet herstellen und darüber Kommunikation betreiben. Über das Internet werden so z.B. aktuelle Meßdaten der Anlage 12 vom Kunden zum Hersteller übermittelt oder die Software der Anlagensteuerung 8 kann vom Hersteller aktualisiert und gewartet werden.

Der Endnutzer 9 ist ein Laptop, der von einem Mitarbeiter des Herstellers mobil genutzt wird. Der Mitarbeiter ist für die Wartung und Weiterentwicklung der Anlagensteuerung 8 zuständig.

Nachdem die Anlage 12 erstmalig in Betrieb genommen worden ist und die Anlagensteuerung 8 bei Inbetriebnahme erstmalig eine Verbindung zum Internet 1 aufbaut, nimmt die Anlagensteuerung 8 unmittelbar mit dem Firmenserver 7 Kontakt auf und meldet sich bei diesem selbsttätig an. Dabei ist der Domain-Name des Firmenservers 7 bereits bei Auslieferung der Anlage 12 und der Anlagensteuerung 8 festgelegt, so daß der Verbindungsweg über das Internet 1 zum Firmenserver 7 kundenseitig nicht in die Anlagensteuerung 8 eingegeben werden muß.

Nach dem Verbindungsaufbau zwischen der Anlagensteuerung 8 und dem Firmenserver 7 identifiziert sich die Anlagensteuerung 8 mit einer individuellen Anlagenkennzeichnung. Aufgrund der individuellen Anlagenkennzeichnung teilt der Firmenserver 7 der Anlagensteuerung einen Domain-Namen zu (z.B. www. Anlage 01.de), registriert die Internet-Adresse der Anlagensteuerung 8 und katalogisiert die Anlage anhand der individuellen Anlagenkennzeichnung. Statt der Anlagenkennzeichnung kann auch gleich der Domain-Name der Kommunikationseinrichtung mitgeteilt werden.

Aufgrund der geringen Datenmenge, die über das Internet ausgetauscht werden muß, ist es nicht notwendig, daß die Anlagensteuerung 8 ständig online am Internet 1 bleibt. Daher wird die Verbindung zum Internet nur bei Bedarf hergestellt und der Provider 6 teilt der Anlagensteuerung 8 bei jedem Verbindungsaufbau meist dynamisch eine neue Internet-Adresse zu. Diese Internet-Adresse wird bei jedem Verbindungsaufbau zum Internet 1 zunächst dem Firmenserver 7 mitgeteilt, der die Internet-Adresse in einer internen Tabelle aktualisiert. Weiterhin registriert der Firmenserver 7 den Online-Status der Anlagensteuerung 8, so daß der Firmenserver 7 Kenntnis davon hat, ob die Anlagensteuerung 8 über das Internet 1 erreichbar ist oder nicht. Zusätzlich läuft im Firmenserver 7 eine automatische Abfrageroutine ab, die in Intervallabständen von beispielsweise einer halben Stunde über das Internet 1 versucht eine Verbindung zur Anlagensteuerung 8 herzustellen und dabei registriert, ob diese online mit dem Internet 1 verbunden ist oder nicht.

Auf die eben beschriebene Weise aktualisiert und verwaltet der Firmenserver 7 eine Vielzahl von Anlagen des Herstellers, die an Kunden ausgeliefert sind oder an verschiedenen Standorten des Herstellers aufgebaut sind.

Neben der Verwaltung der Internet-Adresse und des Online-Status der Anlagensteuerung 8 stehen auf dem Firmenserver 7 auch Speichereinrichtungen zur Verfügung, die einen Teil der Speichereinrichtung in der Anlagensteuerung 8 spiegeln. D.h., ein besonderer Teil des Datenbestandes und ein Teil der Software der Anlagensteuerung 8 ist nicht nur in dem Speicher der Anlagensteuerung 8 selbst vorhanden, sondern wird identisch auf der Speichereinrichtung des Firmenservers 7 bereitgehalten. Bei jedem Verbindungsaufbau zwischen der Anlagensteuerung 8 und dem Firmenserver 7 werden die Daten wechselweise zwischen der Speichereinrichtung der Anlagensteuerung 8 und der Speichereinrichtung des Firmenservers 7 ausgetauscht, bis die Daten und die Software jeweils die gleiche Aktualität aufweisen.

Zur Kontrolle oder Wartung der Anlage 12 baut der Entwicklungsingenieur über sein tragbarer Computer ("Notebook") 9 und den Provider 2 einen Kontakt zur Anlagensteuerung 8 auf. Der erstmalige Verbindungsaufbau erfolgt derart, daß zunächst eine Verbindung zwischen dem tragbaren Computer 9 und dem Firmenserver 7 hergestellt wird. Dort fragt der tragbare Computer 9 anhand der Anlagenkennzeichnung unmittelbar den Domain-Namen der Anlagensteuerung 8 ab und stellt dann über das Internet 1 die Verbindung zur Anlagensteuerung 8 her. Dabei ist der Domain-Name eindeutig der Anlage zugeordnet. Ein Ingenieur kann somit sofort über den Domain-Name mittels der Kommunikationseinrichtung auf die Anlagensteuerung zugreifen. Ist für den tragbaren Computer 9 die Anlagenkennzeichnung nicht zugänglich, so kann zum Verbindungsaufbau zunächst auf dem Anlagenkatalog des Firmenservers 7 die Anlage anhand der Katalogisierung herausgesucht werden und dadurch der Domain-Name der Anlagensteuerung 8 ermittelt werden.

Nachdem der erstmalige Verbindungsaufbau erfolgt ist, fragt der Laptop 9 bei den folgenden Verbindungen zur Anlagensteuerung 8 die Adresse der Anlagensteuerung 8 unter dem Domain-Namen beim Firmenserver 7 ab bzw. der Firmenserver fungiert als Name-Server, und die Verbindung zwischen Notebook und Anlage wird automatisch hergestellt.

Da der Firmenserver 7 den aktuellen Online-Zustand bzw. Bereitschaftszustand der Anlagensteuerung 8 registriert hat, kann die Verbindung zur Anlagensteuerung 8 nicht hergestellt werden, wenn diese momentan nicht mit dem Internet 1 verbunden ist. Es kann dem Nutzer sofort mitgeteilt werden, wie der Zustand der Anlage ist, online, offline oder unbekannt.

Ist die Anlagensteuerung 8 nicht über das Internet 1 erreichbar, so muß eine unmittelbare Verbindung zur Anlagensteuerung 8 nicht hergestellt werden, wenn der Datenaustausch oder die Softwareaktualisierung zwischen dem Laptop 9 und der Anlagensteuerung 8 lediglich den Teil der Datenmenge und des Softwarebestandes der Anlagensteuerung 8 betrifft, der in der Speichereinrichtung des Firmenservers 7 gespiegelt ist. In diesem Fall genügt es, wenn an Stelle der Kommunikation zwischen dem Laptop 9 und der Anlagensteuerung 8 die Kommunikation lediglich zwischen dem Laptop 9 und dem Firmenserver 7 erfolgt, um Daten abzurufen, Daten aufzuspielen oder die Software zu aktualisieren.

Die dargestellte Kommunikationsstruktur gewährleistet eine Kommunikation mit einer Vielzahl von Anlagen bei verschiedenen Kunden sowie beim Hersteller selbst, wobei der manuelle Verwaltungsaufwand bei der Adressvergabe und -Aktualisierung vermieden wird.

Umgekehrt lassen sich über den Firmenserver 7 z.B. auch die Adressen der Endgeräte der Entwicklungs- und Servicemitarbeiter verwalten. Beispielsweise teilt der Laptop 9 dem Firmenserver 7 beim Verbindungsaufbau zum Firmenserver 7 seine aktuelle Adresse mit. Versucht nun die Anlagensteuerung 8 eine Verbindung zum Laptop 9 herzustellen, um z.B. eine Regelabweichung zu melden, so kontaktiert sie zunächst den Firmenserver 7 und erfragt dort die aktuelle Adresse des Laptops 9 und dessen Online-Status. Ist der Laptop 9 momentan nicht mit dem Internet 1 verbunden, so werden aufgrund der Dringlichkeit die Daten im Firmenserver 7 hinterlegt, die dieser später an den Laptop 9 weiterleitet. Bei häufigem Wechsel des Einsatzortes des Mitarbeiters ändert sich die Adresse dessen Laptops 9 laufend und wird vom Firmenserver 7 entsprechend aktualisiert, so daß damit eine effiziente Kommunikation ermöglicht wird, d.h. der sich ändernden IP-Adresse muss immer der gleiche Domain-Name zugewiesen werden.

### BEZUGSZEICHENLISTE

- 1:: Internet-Netzwerk
- 2 bis 6:: Internet-Provider
- 7 bis 11:: Endnutzer
- 7:: Firmenserver
- 8:: Anlagensteuerung
- 9:: Laptop
- 12:: Anlage

## Patentansprüche

1. Kommunikationseinrichtung zur Zuordnung und Verwaltung von Namen und Adressen, wobei die Kommunikationseinrichtung (7) aufweist:
ein Mittel zur Vergabe eines Namens für eine neue Teilnehmereinrichtung (8) bei einer ersten Verbindung zwischen der Kommunikationseinrichtung (7) und der neuen Teilnehmereinrichtung (8) über ein Kommunikationsnetzwerk (1), wobei dem neuen Namen die Adresse der Teilnehmereinrichtung (8) zugeordnet wird,
ein Mittel zur Aktualisierung der Adresse bei jeder weiteren Verbindung zwischen der Kommunikationseinrichtung (7) und der Teilnehmereinrichtung (8) über das Kommunikationsnetzwerk (1), wobei die Teilnehmereinrichtung (8) bei jedem Verbindungsaufbau über das Kommunikationsnetzwerk (1) zuerst eine Verbindung mit der Kommunikationseinrichtung (7) aufbaut, und
ein Mittel zur Verbindung einer Nutzereinrichtung (9) mit der Teilnehmereinrichtung (8) über das Kommunikationsnetzwerk (1) oder zur Übermittlung der aktuellen Adresse der Teilnehmereinrichtung (8) an die Nutzereinrichtung (9), wenn die Nutzereinrichtung (9) über die Kommunikationseinrichtung (7) und das Kommunikationsnetzwerk (1) eine Verbindung zur Teilnehmereinrichtung (8) aufbaut;
**gekennzeichnet durch** ein Mittel zur ersatzweisen Durchführung der Kommunikation mit der Nutzereinrichtung (9) an Stelle der Teilnehmereinrichtung (8), wenn die Teilnehmereinrichtung (8) über das Kommunikationsnetzwerk (1) nicht erreichbar ist, und zum Durchführen eines Datenabgleichs zwischen der Kommunikationseinrichtung (7) und der Teilnehmereinrichtung (8), wenn die Kommunikationseinrichtung (7) über das Kommunikationsnetzwerk (1) zur Teilnehmereinrichtung (8) eine Verbindung aufbaut.

2. Kommunikationseinrichtung nach Anspruch 1, **gekennzeichnet durch** ein Mittel zur automatischen zyklischen Abfrage des Verbindungszustands der Teilnehmereinrichtung (8) über das Kommunikationsnetzwerk (1) und zur Mitteilung des Verbindungszustands an die Nutzereinrichtung (9), wenn die Nutzereinrichtung (9) über die Kommunikationseinrichtung (7) und das Kommunikationsnetzwerk (1) eine Verbindung zur Teilnehmereinrichtung (8) aufbaut.

3. Kommunikationseinrichtung nach Anspruch 1 oder 2, **dadurch gekennzeichnet, daß** die Kommunikationseinrichtung (7) immer unter dem gleichen Namen über das Kommunikationsnetzwerk (1) erreichbar ist.

4. Kommunikationseinrichtung nach einem der vorhergehenden Ansprüche, **dadurch gekennzeichnet, daß** das Mittel zur Vergabe eines neuen Namens und das Mittel zur Aktualisierung der Adresse eine Vielzahl von Teilnehmereinrichtungen (9) verwaltet und jeder Teilnehmereinrichtung (8) ein eigener Name zugewiesen wird.

5. Kommunikationseinrichtung nach einem der vorhergehenden Ansprüche, **dadurch gekennzeichnet, daß** die Adresse eine Internet-Protokoll-Adresse ist.

6. Kommunikationseinrichtung nach einem der vorhergehenden Ansprüche , **dadurch gekennzeichnet, daß** der Name ein Domain-Name ist bzw. ein vom System akzeptierter Alias-Name bei anderen Protokollen.

7. Kommunikationsverfahren zur Zuordnung und Verwaltung von Namen und Adressen von mindestens einer Teilnehmereinrichtung (8) durch eine Kommunikationseinrichtung (7), wobei das Verfahren die folgenden Schritte aufweist:
- Vergabe eines neuen Namens für jede neue Teilnehmereinrichtung (8) durch die Kommunikationseinrichtung (7) bei einer ersten Verbindung zwischen der Kommunikationseinrichtung (7) und der neuen Teilnehmereinrichtung (8) über ein Kommunikationsnetzwerk (1),
- Zuordnen der aktuellen Adresse der Teilnehmereinrichtung (8) zu dem neuen Namen,
- Aktualisieren der Adresse der Teilnehmereinrichtung (8) bei jeder weiteren Verbindung zwischen der Kommunikationseinrichtung (7) und der Teilnehmereinrichtung (8) über das Kommunikationsnetzwerk (1) und
- Verbinden einer Nutzereinrichtung (9) mit der Teilnehmereinrichtung (8) über das Kommunikationsnetzwerk (1) oder Übermitteln der aktuellen Adresse der Teilnehmereinrichtung (8) an die Nutzereinrichtung (9), wenn die Nutzereinrichtung (9) über die Kommunikationseinrichtung (7) und das Kommunikationsnetzwerk (1) eine Verbindung zur Teilnehmereinrichtung (8) aufbaut;
**gekennzeichnet durch** die Schritte:
- ersatzweise Durchführen der Kommunikation mit der Nutzereinrichtung (9) an Stelle der Teilnehmereinrichtung (8), wenn die Teilnehmereinrichtung (8) über das Kommunikationsnetzwerk (1) nicht erreichbar ist, und
- Durchführen eines Datenabgleichs zwischen der Kommunikationseinrichtung (7) und der Teilnehmereinrichtung (8), wenn die Kommunikationseinrichtung (7) über das Kommunikationsnetzwerk (1) zur Teilnehmereinrichtung (8) eine Verbindung aufbauen kann.

8. Kommunikationsverfahren nach Anspruch 7, **gekennzeichnet durch** die Schritte:
- automatisches zyklisches Abfragen des Verbindungszustands der Teilnehmereinrichtung (8) über das Kommunikationsnetzwerk (1) und
- Mitteilen des Verbindungszustands an die Nutzereinrichtung (9), wenn die Nutzereinrichtung (9) über die Kommunikationseinrichtung (7) und das Kommunikationsnetzwerk (1) eine Verbindung zur Teilnehmereinrichtung (8) aufbaut.

## Claims

1. Communication device for the allocation and management of names and addresses, wherein the communication device (7) comprises: a means for allocating a name for a new subscriber device (8) with a first connection between the communication device (7) and the new subscriber device (8) via a communication network (1), whereby the address of the subscriber device (8) is allocated to the new name, a means for updating the address with each further connection between the communication device (7) and the subscriber device (8) via the communication network (1), whereby the subscriber device (8) with each connection made via the communication network (1) firstly forms a connection with the communication device (7), and a means for connecting a user device (9) with the subscriber device (8) via the communication network (1) or for transmitting the current address of the subscriber device (8) to the user device (9), when the user device (9) makes a connection with the subscriber device (8) via the communication device (7) and the communication network (1), **characterised by** a means for the substitution-type execution of communication with the user device (9) instead of the subscriber device (8), when the subscriber device (8) cannot be contacted via the communication network (1), and for carrying out data matching between the communication device (7) and the subscriber device (8), when the communication device (7) forms a connection with the subscriber device (8) via the communication network (1).

2. Communication device according to claim 1, **characterised by** a means for the automatic, periodic query of the connection status of the subscriber device (8) via the communication network (1) and for communicating the connection status to the user device (9), when the user device (9) forms a connection with the subscriber device (8) via the communication device (7) and the communication network (1).

3. Communication device according to claim 1 or 2, **characterised in that** the communication device (7) can always be contacted under the same name via the communication network (1).

4. Communication device according to one of the preceding claims, **characterised in that** the means for allocating a new name and the means for updating the address manage a large number of subscriber devices (9) and each subscriber device (8) is allocated its own name.

5. Communication device according to one of the preceding claims, **characterised in that** the address is an Internet Protocol address.

6. Communication device according to one of the preceding claims, **characterised in that** the name is a domain name or an alias name accepted by the system with different protocols.

7. Communication method for allocating and managing names and addresses of at least one subscriber device (8) by means of a communication device (7), whereby the method comprises the following steps: - allocation of a new name for each new subscriber device (8) by means of the communication device (7) in a first connection between the communication device (7) and the new subscriber device (8) via a communication network (1), - allocation of the current address of the subscriber device (8) to the new name, - updating the address of the subscriber device (8) with each further connection between the communication device (7) and the subscriber device (8) via the communication network (1) and - connecting a user device (9) with the subscriber device (8) via the communication network (1) or transmitting the current address of the subscriber device (8) to the user device (9) when the user device (9) forms a connection with the subscriber device (8) via the communication device (7) and the communication network (1) **characterised by** the steps : substitution-type execution of communication with the user device (9) instead of the subscriber device (8), when the subscriber device (8) cannot be contacted via the communication network (1) and - execution of data macthing between the communication device (7) and the subscriber device (8), when the communication device (7) can form a connection with the subscriber device (8) via the communication network (1).

8. Communication method according to claim 7, **characterised by** the steps:
- automatic periodic query of the connection status of the subscriber device (8) via the communication network (1), and - communication of the connection status to the user device (9) when the user device (9) forms a connection with the subscriber device (8) via the communication device (7) and the communication network (1).

## Revendications

1. Dispositif de communication pour l'affectation et la gestion des noms et des adresses, le dispositif de communication (7) comprenant :
un moyen d'attribution d'un nom pour un nouvel équipement abonné (8) lors d'une première connexion entre le dispositif de communication (7) et le nouvel équipement abonné (8) via un réseau de communication (1), l'adresse de l'équipement abonné (8) étant attribuée au nouveau nom,
un moyen d'actualisation de l'adresse lors de chaque autre connexion entre le dispositif de communication (7) et le nouvel équipement abonné (8) via le réseau de communication (1),
l'équipement abonné (8) établissant tout d'abord une connexion avec le dispositif de communication (7) à chaque établissement de connexion via le réseau de communication (1), et
un moyen de connexion d'un équipement utilisateur (9) à l'équipement abonné (8) via le réseau de communication (1) ou de transmission de l'adresse actuelle de l'équipement abonné (8) à l'équipement utilisateur (9), lorsque l'équipement utilisateur (9) établit une connexion vers l'équipement abonné (8) via le dispositif de communication (7) et le réseau de communication (1) ;
**caractérisé par** un moyen de réalisation équivalente de la communication avec l'équipement utilisateur (9) à la place de l'équipement abonné (8), lorsque l'équipement abonné (8) ne peut être atteint via le réseau de communication (1), et de réalisation d'un alignement de données entre le dispositif de communication (7) et l'équipement abonné (8), lorsque le dispositif de communication (7) établit une connexion via le réseau de communication (1) vers l'équipement abonné (8).

2. Dispositif de communication selon la revendication 1, **caractérisé par** un moyen d'interrogation cyclique automatique de l'état de connexion de l'équipement abonné (8) via le réseau de communication (1), et de communication de l'état de connexion à l'équipement utilisateur (9), lorsque l'équipement utilisateur (9) établit une connexion vers l'équipement abonné (8) via le dispositif de communication (7) et le réseau de communication (1).

3. Dispositif de communication selon l'une des revendications 1 ou 2, **caractérisé en ce que** le dispositif de communication (7) peut être toujours atteint sous le même nom via le réseau de communication (1).

4. Dispositif de communication selon l'une des revendications précédentes, **caractérisé en ce que** le moyen d'attribution d'un nouveau nom et le moyen d'actualisation de l'adresse gèrent une multitude d'équipements abonnés (9), et **en ce qu'**un nom propre est affecté à chaque équipement abonné (8).

5. Dispositif de communication selon l'une des revendications précédentes, **caractérisé en ce que** l'adresse est une adresse de protocole Internet.

6. Dispositif de communication selon l'une des revendications précédentes, **caractérisé en ce que** le nom est un nom de domaine et/ou un alias accepté par le système pour les autres protocoles.

7. Procédé de communication pour l'affectation et la gestion des noms et des adresses d'au moins un équipement abonné (8) par un dispositif de communication (7), le procédé comprenant les étapes suivantes :
- attribution d'un nouveau nom pour chaque nouvel équipement abonné (8) par le dispositif de communication (7) lors d'une première connexion entre le dispositif de communication (7) et le nouvel équipement abonné (8) via un réseau de communication (1),
- affectation de l'adresse actuelle de l'équipement abonné (8) au nouveau nom,
- actualisation de l'adresse de l'équipement abonné (8) lors de chaque autre connexion entre le dispositif de communication (7) et l'équipement abonné (8) via le réseau de communication (1), et
- établissement d'une connexion entre l'équipement utilisateur (9) et l'équipement abonné (8) via le réseau de communication (1) ou transmission de l'adresse actuelle de l'équipement abonné (8) à l'équipement utilisateur (9), lorsque l'équipement utilisateur (9) établit une connexion via le dispositif de communication (7) et le réseau de communication (1) vers l'équipement abonné (8),
**caractérisé par** les étapes suivantes :
- réalisation équivalente de la communication avec l'équipement utilisateur (9) à la place de l'équipement abonné (8), lorsque l'équipement abonné (8) ne peut être atteint via le réseau de communication (1), et
- réalisation d'un alignement de données entre le dispositif de communication (7) et l'équipement abonné (8), lorsque le dispositif de communication (7) peut établir une connexion via le réseau de communication (1) vers l'équipement abonné (8).

8. Procédé de communication selon la revendication 7, **caractérisé par** les étapes suivantes :
- interrogation cyclique automatique de l'état de connexion de l'équipement abonné (8) via le réseau de communication (1), et
- communication de l'état de connexion à l'équipement utilisateur (9), lorsque l'équipement utilisateur (9) établit une connexion vers l'équipement abonné (8) via le dispositif de communication (7) et le réseau de communication (1), **caractérisé par** les étapes suivantes :
- réalisation équivalente de la communication avec l'équipement utilisateur (9) à la place de l'équipement abonné (8), lorsque l'équipement abonné (8) ne peut être atteint via le réseau de communication (1), et
- réalisation d'un alignement de données entre le dispositif de communication (7) et l'équipement abonné (8), lorsque le dispositif de communication (7) peut établir une connexion via le réseau de communication (1) vers l'équipement abonné (8).
